# EUROPEAN PATENT SPECIFICATION

(11) **EP 1 238 221 B1**
(45) Date of publication and mention of the grant of the patent: **26.05.2004**
(21) Application number: 00978123.8
(22) Date of filing: 22.11.2000
(51) Int. Cl.: F16K 31/44

(54) **VALVE HANDWHEEL**
VENTILHANDRAD
ROBINET A VOLANT MANUEL

(30) Priority: 02.12.1999 NO 995918
(43) Date of publication of application: 11.09.2002
(73) Proprietor: Hystad, Ann Helen, 4250 Kopervik (NO)
(72) Inventor: Hystad, Ann Helen, 4250 Kopervik (NO)
(74) Representative: Cardwell, Stuart Martin
(86) International application number: PCT/NO2000/000394
(87) International publication number: WO 2001/040691

(56) References cited:
- US-A- 3 293 938
- US-A- 4 964 613
- US-A- 5 477 752

## Description

This invention relates to a valve handwheel resembling a spoked wheel, especially a handwheel for large valves, for example manually operable high-rate valves, wellhead valves, valves for gas production and transportation facilities, production valves, valves with a so-called rising stem, etc., which valve handwheel comprises an outer ring and generally radial spokes converging in a central portion.

In flat embodiments of valve handwheels said spokes will be approximately in the same plane as the wheel ring. In a so-called deep embodiment of a valve handwheel, in which the central portion is somewhat set back relative to the handwheel ring, counted from the front side of the valve handwheel, the spokes will have, in addition to a generally radial extent, an inward, rearward slope from their points of attachment on the handwheel ring towards said central handwheel portion. Valve handwheels of this configuration exist, preferably in cast embodiments of metal.

For safety reasons demands are made on handwheels of such valves, that they be manually operable, since it cannot be risked that for example a hydraulic drive aggregate should fail when there is a demand for closing or opening such large valves.

Often two coordinate valves are used, one manually manoeuvrable and one hydraulically manoeuvrable valve, but such an arrangement, which, of course, makes the installation more expensive, represents only a partial solution to the problems inherent in manually operable valves of any of the types mentioned above.

The opening or closing of such manual high-rate valves, will normally require between 180 and 480 turns of the valve handwheel. Two valve operators may spend up to 4 - 5 hours closing one such valve. Besides, the work is both heavy, strenuous and highly monotonous.

According to NO patent publication No. 167.230, to a handwheel of the kind stated initially, there is mounted, immediately before closing/opening, a mounting plate formed with a nut-like protrusion. The mounting plate is then positioned and oriented so relative to the centre and the circular outer circumference of the valve handwheel, that the geometric centre of said protrusion coincides with the axis of the valve handwheel.

When the mounting plate with its nut-like protrusion has been centred relative to the valve handwheel, which is time-consuming precision work, where the centred final position depends on judgement, the necessary torque is applied to the valve handwheel, clockwise/anticlockwise, depending on the direction of rotation required for the closing/opening, by the central nut-like protrusion mounted thereon.

For this, an actuator, driven by pressurized fluid, preferably pneumatic, is used, which has a working head, which can be rotated in both directions of rotation, and which is formed to allow a torsionally stiff connection to said protrusion mounted at the centre of the valve handwheel.

If said mounting plate carries a hexagonal nut protrusion, the working head of said actuator will, of course, be formed with a recess complementary thereto, and vice versa. When the mutually complementary means are in engagement with a minimal, but sufficient tolerance for establishing/terminating the engagement, torque is transferred from the actuator to the valve handwheel. In addition to the working head, actuators of this kind comprise a very long-stemmed body/handle, so that closing or opening of a valve of the kind mentioned above can be provided from a stand at a certain distance from the valve, while at the same time, the operator can absorb the torque relatively easily.

This known reversible, portable valve handwheel actuator represents considerable technical advantages over stationary hydraulic aggregates for the opening/closing of valves of the kind in question.

Through the present invention, an embodiment of a valve handwheel has been obtained, which is suitable for use in connection with actuators operated by pressurized fluid, of the kind described and similar ones. In the following the invention will be described as if such an actuator were always formed with a recess complementary to the outer circumference of a nut. The engagement is established between a nut/nut-like protrusion/part/portion and a recess complementary thereto, which is thus defined by a cornered, circumferential surface, so that with the engagement established with an insignificant tolerance, torques may be transferred between the nut and another part, in which the recess is formed, and in principle it is not essential whether it is the driving or the driven parts which form the actual nut protrusion.

In order better to provide for rational operation of particularly large valves equipped with valve handwheels, and whereby improvements productionwise and strengthwise relative to known technique are to be ensured, a valve handwheel according to the present invention is formed so that it exhibits the features specified in the following Claims.

A valve handwheel according to the invention distinguishes itself by being formed with a central, embedded, fixed protrusion of a polygonal, nut-like circumference, the spokes extending from the outer handwheel ring to the central protrusion.

In such a valve handwheel which can be operated manually, the mounting and dismounting of said mounting plate every time the valve is to be closed/opened, cf. Norwegian patent document No. 167.230, can be avoided. Great precision is maintained in the manufacturing of the valve handwheels, so that the axis of the nut-like protrusion will be positioned at the geometrically central point of the valve handwheel. After that it will not be necessary to give the aligning of these axes another thought. The fixing of this central hexagonal nut of the valve handwheel in the casting strengthens the handwheel instead of weakening it, and contributes to improve the control, among other things relative to the complementary recess formed in the working head of the actuator, at the end of its long-stemmed handle body. Avoiding the elaborate mounting/dismounting of the mounting plate provided with the nut, explained in detail in NO 167.230, there is achieved, according to the invention, a not insignificant efficiency improvement in the manipulation of valve.

Regardless of a flat or deep embodiment of the valve handwheel, it is practical and advantageous, according to the invention, that the central nut-like protrusion of the handwheel protrudes by its front end in front of a plane through the outer annular part of the handwheel. This involves, in the deep embodiment, in which the central part of the handwheel is somewhat set back from the plane of said handwheel ring, that the central nut body of the handwheel will have a larger longitudinal extent than in the flat embodiment, in which the spokes lie in the plane of the handwheel ring, or within an imaginary plane touching the forward face of the handwheel ring, and a plane parallel therewith, touching its rearward face. Thus, in a side view, the handwheel ring will hide the spokes.

A desired number of spokes can be arranged. In principle, two broad, heavy-bodied spokes can be used, but three to six radial spokes are preferred, spaced apart by the same angle distance.

The nut-like protruding body thus forms a connecting element for a valve handwheel. In valves with stems, this connecting element will have a central hole extending therethrough. Of course, this applies to both the flat and the deep embodiment, whereas such a hole is not essential by valve handwheels for stemless valves.

Valve handwheels according to the invention are meant in particular to be used with large heavy-to-operate valves, but may with advantage be used with smaller, easy-to-operate valves, manifolds etc., in which it is advantageous to turn the valve handwheels by means of an actuator of the kind described.

Non-limiting examples of preferred embodiments will be described in further detail in the following, and are illustrated in the accompanying drawings, in which
Fig. 1 shows a view of a valve handwheel for a stemless valve;
Fig. 2 shows the same valve handwheel in a so-called flat embodiment, in a side view;
Fig. 3 shows a view corresponding to Fig. 1 of a valve handwheel meant for use with a valve with stem;
Fig. 4 shows the valve handwheel of Fig. 3 in a side view;
Fig. 5 shows a side view of a valve handwheel in a so-called deep embodiment; and
Fig. 6 shows, in a perspective view, the valve embodiment (for a stemless valve) shown in Fig. 5, and in which a pneumatic opening/closing actuator is placed with the recess of its working head aligned with the nut.

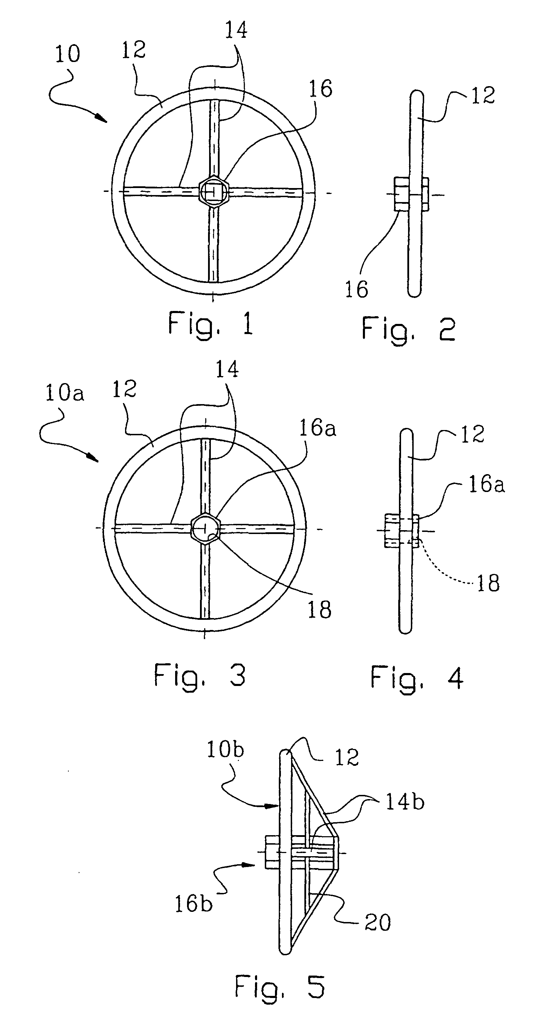

Reference is made to the drawings, First to Figs. 1 and 2, which show a flat embodiment of a valve handwheel formed in accordance with the invention.

In a manner known in itself, the valve handwheel 10 has the form of a spoked wheel comprising an outer torus-shaped handwheel element 12, and in the exemplary embodiment four radial spokes 14 in a 90° division. The number and positioning of the spokes 14 are not critical factors to the present invention, provided that strengthwise they can absorb the required torques applied centrally to the valve handwheel 10.

At the centre of the valve handwheel ring 12, the radially innermost ends of the spokes 14 are cast or fixed, in another manner known in itself, to a nut-like protruding body 16, which has in the exemplary embodiment an outer hexagonal circumference corresponding to that of a hexagonal nut. This hexagonal nut body 16 and its embedding in the area of the radially inner ends of the spokes 14, will be sufficiently strong to absorb the necessary torques applied to the valve handwheel 10 during closing or opening.

In the embodiment according to Figs. 3 and 4, the configuration of the valve handwheel is by and large the same as that in Figs. 1 and 2. The difference consist in a central, through-going, circular hole 18, this valve handwheel 10a being meant for valves with spindles (not shown). Consequently, this hexagonal nut body distinguishes itself from the hexagonal nut body in Figs. 1 and 2, and is therefore identified by 16a.

For the rest, the same reference numerals as in Figs. 1 and 2 have been used in Figs. 3 and 4.

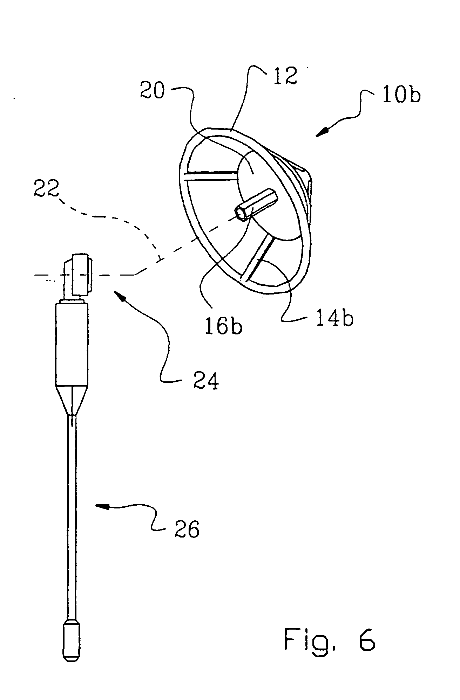

As the central hole 18 extending through the hexagonal nut does not show in a side view (unless included in dotted lines, see Fig. 4), the deep embodiment according to Fig. 5 may just as well show the valve handwheel 10 as the valve handwheel 10a.

In addition to having a generally radial extent, each spoke 14b of the deep embodiment slopes towards the rear, radially downwards towards the centre, where the end of the spokes have been cast together with a rear end portion of an elongate hexagonal nut body 16b. In the deep embodiment of the valve handwheel a central stiffening and reinforcing plate 20 may be arranged.

According to Fig. 6 there is suggested in a dotted line 22 that the geometric centre of a hexagonal recess (not visible) is complementary to the hexagonal nut 16b and formed in an actuator head 24 and brought in line with the axis of the hexagonal nut body 16b.

Such and similar valve actuators 26 are well known. Normally, they are pneumatically operated and have long handles. The working head 24 transfers the torque and can be rotated in both directions, depending on whether the valve is to be closed or opened.

It is essential to the invention that in addition to the easy clockwise/anticlockwise rotating by means of the actuator 26, the valve handwheel can be turned manually, so that the valve in question can be closed/opened also in those cases where the actuator is not available, or when the conditions, for example explosion hazard, would suggest that it would be inadvisable to use an actuator driven by fluid pressure.

In order to adapt the valve handwheels according to the invention to actuators 26, and in particular to the configuration of the working heads 24 thereof with the hexagonal recess, it is advantageous that the hexagonal nut body 16, 16a and 16b projects forward by its free end in front of a plane through the handwheel ring 12. Thereby the actuator head 24 need not have any particular extent transversally to the length of the handle.

## Claims

1. A valve handwheel, in particular for manually operable valves with or without spindles, comprising an outer handwheel ring (12) and generally radial spokes (14; 14b) secured to the handwheel ring (12), **characterized in that** at the centre of the valve handwheel (10; 10a; 10b) there is arranged a coaxial protruding body (16; 16a; 16b), to which the radially inner ends of the spokes (14; 14b) are secured, directly or indirectly, and which has a cross-section of a polygonal, outer, nut-like circumferential shape.

2. A valve handwheel according to claim 1, **characterized in that** said protruding body (16; 16a; 16b) has the form of a hexagonal nut.

3. A valve handwheel according to claim 1 or 2, **characterized in that** the front end of the protruding body (16; 16a; 16b) protrudes in front of a plane through the handwheel ring (12).

4. A valve handwheel according to one or more of the preceding claims, **characterized in that** said protruding body - in valves with stems - is formed with a coaxial through-going hole (18) for the passage of the valve stem.

## Patentansprüche

1. Ventilhandrad, insbesondere für manuell betreibbare Ventile mit oder ohne Schaft, umfassend einen äußeren Handradring (12) und an dem Handradring (12) sicher befestigte, im wesentlichen radiale Speichen (14; 14b), **dadurch gekennzeichnet, dass** im Zentrum des Ventilhandrads (10; 10a; 10b) ein koaxial herausragender Körper (16; 16a; 16b) angeordnet ist, an dem die radial inneren Enden der Speichen (14; 14b) direkt oder indirekt sicher befestigt sind, und das einen Querschnitt von polygonaler, äußerer, mutterförmig umlaufender Form hat.

2. Ventilhandrad nach Anspruch 1, **dadurch gekennzeichnet, dass** der herausragende Körper (16; 16a; 16b) die Form einer hexagonalen Mutter hat.

3. Ventilhandrad nach Anspruch 1 oder 2, **dadurch gekennzeichnet, dass** das vordere Ende des herausragenden Körpers (16; 16a; 16b) über eine Ebene durch den Handradring (12) herausragt.

4. Ventilhandrad nach einem oder mehreren der vorangehenden Ansprüche, **dadurch gekennzeichnet, dass** der herausragende Körper - bei Ventilen mit Schaft - mit einem koaxialen Durchgangsloch (18) zum Durchführen des Ventilschafts gebildet ist.

## Revendications

1. Robinet à volant manuel, en particulier pour soupapes pouvant fonctionner manuellement avec ou sans tiges, comprenant un anneau de volant extérieur (12) et des bras généralement radiaux (14 ; 14b) fixés à l'anneau de volant (12), **caractérisé en ce qu'**au centre du robinet à volant manuel (10 ; 10a ; 10b) est agencé un corps s'étendant de manière coaxiale (16 ; 16a ; 16b), auquel sont fixées les extrémités intérieures radiales des bras (14 ; 14b), directement ou indirectement, et qui a une coupe transversale ayant une forme circonférentielle polygonale extérieure en forme d'écrou.

2. Robinet à volant manuel selon la revendication 1, **caractérisé en ce que** ledit corps en saillie (16 ; 16a ; 16b) a la forme d'un écrou hexagonal.

3. Robinet à volant manuel selon la revendication 1 ou la revendication 2, **caractérisé en ce que** l'extrémité avant du corps en saillie (16 ; 16a ; 16b) s'étend au delà d'un plan passant par l'anneau de volant (12).

4. Robinet à volant manuel selon l'une ou plusieurs des revendications précédentes, **caractérisé en ce que** ledit corps en saillie - dans les soupapes à tiges - comprend un trou passant coaxial (18) pour le passage de la tige de soupape.
